# EUROPEAN PATENT SPECIFICATION

(11) **EP 3 976 325 B1**
(45) Date of publication and mention of the grant of the patent: **23.08.2023**
(21) Application number: 19831997.2
(22) Date of filing: 11.12.2019
(51) Int. Cl.: B26B 15/00, A01G 3/037

(54) **POWER-ASSISTED CUTTING TOOL**
MOTORUNTERSTÜTZTES SCHNEIDWERKZEUG
OUTIL DE COUPE ÉLECTRIQUE

(30) Priority: 03.06.2019 DE 102019003846
(43) Date of publication of application: 06.04.2022
(60) Divisional application: 23169055.3
(73) Proprietor: HUSQVARNA AB, 561 82 Huskvarna (SE)
(72) Inventor: KISTLER, Michael, 89185 Hüttisheim (DE); SCHMID, Michael, 87719 Mindelheim (DE)
(74) Representative: Finkele, Rolf
(86) International application number: PCT/EP2019/084654
(87) International publication number: WO 2020/244794

(56) References cited:
- EP-A1- 2 213 426
- DE-A1-102010 016 296
- DE-A1-102016 211 974

## Description

### TECHNICAL FIELD

The present disclosure relates to cutting tools such as secateurs. More specifically, the present disclosure relates to a cutting tool with a power-assistance feature for an easy and safe cutting action catering to different user profiles.

### BACKGROUND

Cutting tools such as secateurs are used for performing cutting action for garden applications which may involve different cutting force for different branches and the like. Lately there have been increasing demand for power-assisted secateurs, since such tools provide ease of cutting as compared to some old and conventional cutting tools. Such secateurs also sometime have some features to save operators from any risky operation during performing cutting action.

However, there may be instances where such power-assisted secateurs may pose certain risks in case of undesirably fast, and instant powering of the power-assisted secateurs. From implementation benefits, there is a need for a more balanced and user-centric powering of power-assisted secateurs such that they provide required cutting force without hampering user-safety and the like.

An example of a cutting tool is provided by EP3081075 (hereinafter referred to as '075 reference). The '075 reference discloses a cutting device having a first cutting element and a second cutting element which are movable relative to one another. Further, a drive unit is provided in at least one operating state for movement of the second cutting element relative to the first cutting element. Moreover, the cutting device includes a self-switching coupling unit which deactivates or decoupled the drive unit, in the operating state. However, the '075 reference comes short of a provision to provide a smooth and safe operation with user-based power assistance. A further example is given by the prior art documentation DE 10 2010 016 296.

Thus, there is a need of an improved cutting tool which allows ease of operation such as cutting by different individuals who may selectively desire assistance during some cutting applications.

### SUMMARY

In view of the above, it is an objective of the present invention to solve or at least reduce the drawbacks discussed above. The objective is at least partially achieved by a power-assisted cutting tool. The power-assisted cutting tool includes a first cutting element. The power-assisted cutting tool includes a second cutting element pivotally coupled to the first cutting element. The first cutting element and the second cutting element together perform a cutting action on an object placed between them. The power-assisted cutting tool includes a drive unit operatively coupled to at least one of the first cutting element and the second cutting element. Further, the drive unit selectively provides a supplemental motor force to assist a movement of at least one of the first cutting element and the second cutting element to perform the cutting action. Moreover, the power-assisted cutting tool includes a user interface to measure a hand force applied by a user, and generate a signal indicative of the measured hand force. And, the power-assisted cutting tool includes a controller communicably coupled to the user interface and the drive unit, where the controller receives the signal indicative of the measured hand force and actuate the drive unit based on the received signal. Further, the controller adjusts the operation of the drive unit to provide the supplemental motor force based on the measured hand force. The controller of the power-assisted tool actuates the drive unit such that a magnitude of the supplemental motor force is at least one of a continuous variable configured to attain a plurality of different values within a pre-determined force range when the drive unit is assisting the movement of at least one of the first cutting element and the second cutting element to perform the cutting action. Alternatively, the magnitude of the supplemental motor force is at least one of a discreet variable configured to attain a plurality of different values within a pre-determined force range when the drive unit is assisting the movement of at least one of the first cutting element and the second cutting element to perform the cutting action. Thus, the present disclosure provides a simple, efficient, and user-friendly cutting tool which ensures desired power-assistance to a user.

According to the invention, the user interface includes a hall sensor and a magnet to measure the hand force applied by the user. This makes operation of the power-assisted cutting tool more precise and dependent upon user dynamics (i.e. the hand force applied).

According to an embodiment of the present invention, the drive unit includes a motor, a gearbox and a clutch and wire arrangement to selectively provide the supplemental motor force. This arrangement ensures a smooth and safe application of the supplemental motor force to assist in operation of the power-assisted cutting tool.

According to an embodiment of the present invention, the cutting tool includes a means to activate or deactivate the drive unit. Such a provision may be provided to cater to save/extend battery life or allow uninterrupted operation of the power-assisted cutting tool for low battery conditions.

According to an embodiment of the present invention, the drive unit is actuated to supply the supplemental motor force when the hand force measured by the user interface is above a threshold value. The threshold value may be user selected and/or user-centric to make the power-assisted cutting tool applicable for various users, from a child to old age individuals.

According to an embodiment of the present invention, the first cutting element and the second cutting element are biased by a biasing spring, which ensures that the first cutting element and the second cutting element move to their original position in absence of any external force.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a schematic view of a power-assisted cutting tool, in accordance with an embodiment of the present invention;
**FIG. 2** shows a schematic view of the power-assisted cutting tool in an actuated state, in accordance with an embodiment of the present invention;
**FIG. 3** shows a graphical representation for a use scenario of a conventional power-assisted cutting tool; as known in prior art; and
**FIGS. 4** **a to 4 h** show graphical representations for different use scenarios of the power-assisted cutting tool, in accordance with embodiments of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

In the drawings and specification, there have been disclosed preferred embodiments and examples of the invention and, although specific terms are employed, they are used in a generic and descriptive sense only and not for the purpose of limitation of the scope of the invention being set forth in the following claims.

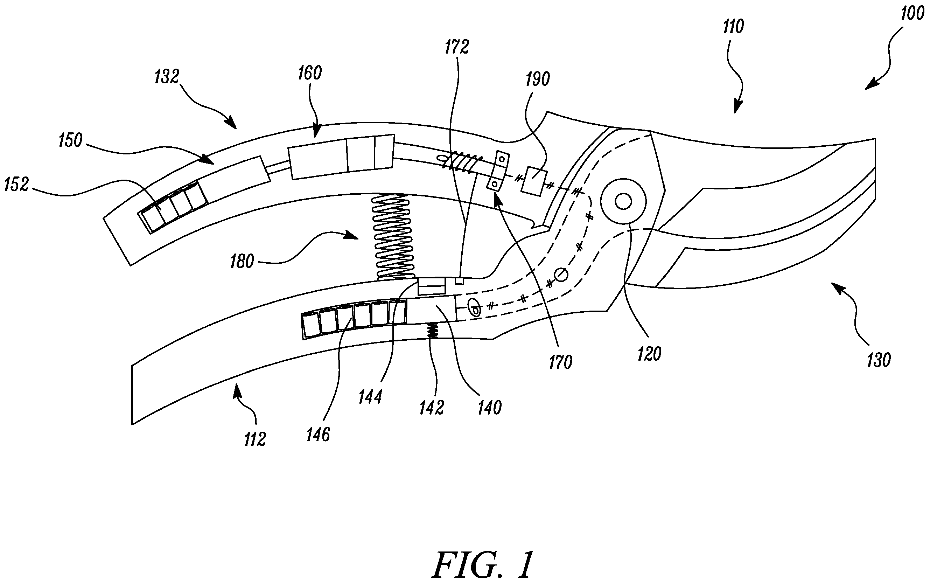

**FIG. 1** illustrates a power-assisted cutting tool **100.** The power-assisted cutting tool **100** of the present disclosure is illustrated as a secateur, however, the present disclosure may be readily applied to any cutting tool **100** such as, but not limited to, a lopper, shear, scissor etc. with two or more cutting edges. The power-assisted cutting tool **100** includes a first cutting element **110** attached to a first handle **112.** The power-assisted cutting tool **100** includes a second cutting element **130** attached to a second handle **132.** Further, the second cutting element **130** is pivotally coupled to the first cutting element **110** at a pivot **120.** The first cutting element **110** and the second cutting element **130** together perform a cutting action on an object (such as a branch, not shown) placed between them.

The power-assisted cutting tool **100** includes a drive unit **170** operatively coupled to at least one of the first cutting element **110** and the second cutting element **130.** In an embodiment, the drive unit **170** is operatively coupled to the first cutting element 110 only. In an embodiment, the drive unit **170** is operatively coupled to the second cutting element 130 only. In another embodiment, the drive unit **170** is operatively coupled to both the first cutting element 110 and the second cutting element 130. The present disclosure illustrates the drive unit **170** powered by a second battery **152** housed within the second handle **132.** However, the drive unit 170 may be housed anywhere within the cutting tool **100** and all such variations have been contemplated and are well within the scope of the present disclosure. Further, the drive unit **170** selectively provides a supplemental motor **150** force to assist a movement of at least one of the first cutting element **110** and the second cutting element **130** to perform the cutting action.

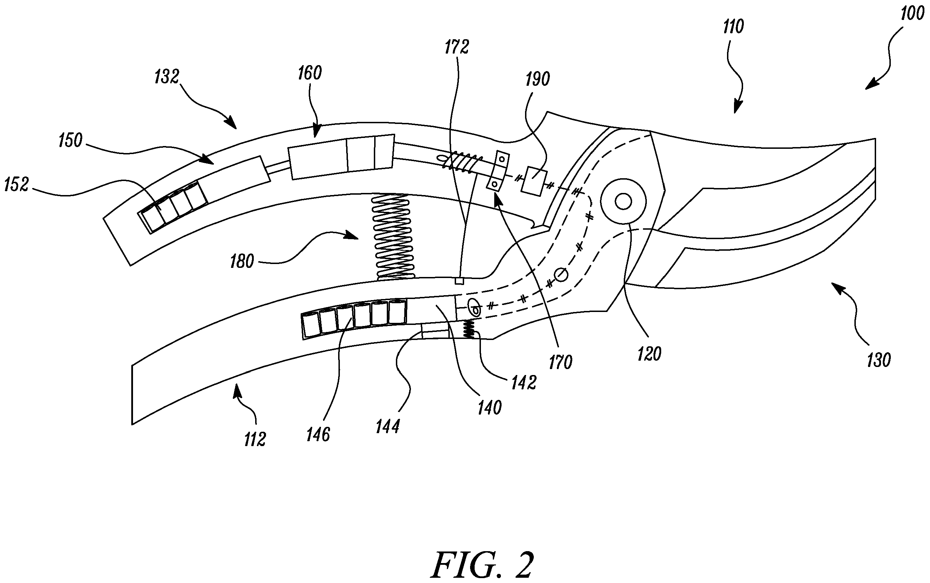

Moreover, the power-assisted cutting tool **100** includes a user interface **140** to measure a hand force applied by a user, and generate a signal indicative of the measured hand force. The user interface **140** is powered by a first battery **146** housed within the first handle **112.** And, the power-assisted cutting tool **100** includes a controller **190** communicably coupled to the user interface **140** and the drive unit **170,** as illustrated by dashed lines in **FIGS. 1****,** **2****.** The controller **190** receives the signal indicative of the measured hand force and actuates the drive unit **170** based on the received signal. As illustrated, the controller **190** is shown housed within the second handle **132,** however it may be housed anywhere within the cutting tool **100,** as will be evident to a person having ordinary knowledge in the art.

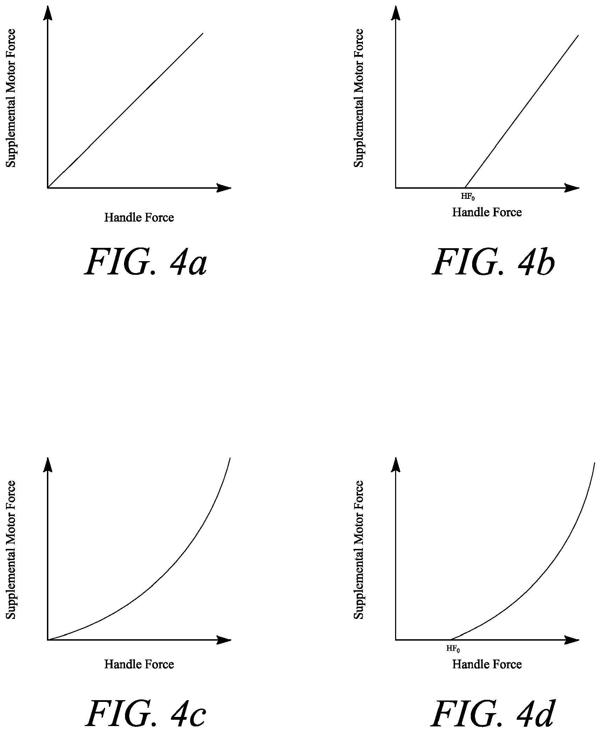

Further, the controller **190** adjusts the operation of the drive unit **170** to provide the supplemental motor force based on the measured hand force. In some embodiments, the controller **190,** the user interface **140,** and the drive unit **170** may be powered by any or both of the first battery **146,** the second battery **152** depending upon implementation needs (say run time, service life and the like) of the cutting tool 100. Moreover, the user of the cutting tool may be prompted status(es) of the first battery **146,** the second battery **152** (alternatively referred to as a battery hereinafter) during powering by the supplemental motor force or while configuring of the cutting tool 100 by the user for any desired working profile of the cutting tool **100** as explained in more details later in **FIGS. 4a to 4h****.**

The power-assisted cutting tool **100** is configured such that the controller **190** actuates the drive unit **170** to provide the supplemental motor force. The supplemental motor force is provided such that a magnitude of the supplemental motor force is at least one of a continuous variable and a discreet variable. In an embodiment, the supplemental motor force is a continuous variable to attain a plurality of different values within a pre-determined force range when the drive unit **170** is assisting the movement of at least one of the first cutting element **110** and the second cutting element **130** to perform the cutting action. The pre-determined force range may be defined between an upper limit and a lower limit. Magnitude of the supplemental motor force as a continuous variable may vary between the upper limit and the lower limit attaining any value therebetween. Magnitude of the supplemental motor force may remain constant or vary between plurality of values based on application requirements.

In another embodiment, the supplemental motor force is a discreet variable to attain a plurality of different values within a pre-determined force range when the drive unit **170** is assisting the movement of at least one of the first cutting element **110** and the second cutting element **130** to perform the cutting action. The pre-determined force range may be defined between an upper limit and a lower limit. Magnitude of the supplemental motor force as a discreet variable may vary between the upper limit and the lower limit attaining discreet values therebetween. Magnitude of the supplemental motor force may remain constant or vary between plurality of values based on application requirements.

**FIG. 2** illustrates the power-assisted cutting tool **100** in an actuated state, in accordance with an embodiment of the present invention. The user interface **140** includes a hall sensor **140,** spring **142** and a magnet **144** to measure the hand force applied by the user. This makes operation of the power-assisted cutting tool **100** more precise and dependent upon user profiles/dynamics (i.e. the hand force applied). Here it is worth noting that the spring **142** and the magnet **144** change their relative positions with respect to the hall sensor **140** on sensing the hand force by the user as depicted here, in comparison to **FIG. 1****.** Further, the cutting tool **100** may include sensors in addition or alternatively to the hall sensor **140,** spring **142** and the magnet **144** to gauge/measure data relevant to the user for more efficient operation of the cutting tool **100.** For instance, the cutting tool **100** may include sensors such as, but not limited to, displacement sensor, force sensor, vitals sensor (heartbeat etc.) which may communicate with the controller **170** to further optimize the operation of the cutting tool **100** as per the user or for any other consideration.

In an embodiment, the drive unit **170** includes a motor **150,** a gearbox **160** and a clutch **170** and wire **172** arrangement to selectively provide the supplemental motor force. This arrangement ensures a smooth and safe application of the supplemental motor force to assist in operation of the power-assisted cutting tool **100.** Further, the drive unit **170** is actuated to supply the supplemental motor force when the hand force measured by the user interface **140** is above a threshold value. When the drive unit **170** is actuated, the motor **150** starts working to actuate the clutch **170** in winding the wire **172** such that the wire **172** works to pull the first handle **112** towards the second handle **132,** by a magnitude in equivalent to the supplemental motor force and thereby assisting the user in the cutting action. The threshold value may be user selected and/or user-centric to make the power-assisted cutting tool **100** applicable for various users, from a child to old age individuals.

In an embodiment, the cutting tool **100** includes a means (such as a button, knob, or switch, not shown) to activate or deactivate the drive unit **170.** The drive unit **170** may be deactivated for instances which may require to save/extend battery life or allow uninterrupted operation of the power-assisted cutting tool **100** for low battery conditions. In such instances of the deactivated drive unit **170,** the motor **150** will remain in a disengaged state leading to a purely user-based cutting action by the cutting tool **100,** without any supplemental motor force.

In an embodiment, the first cutting element **110** and the second cutting element **130** are biased by a biasing spring **180,** which ensures that the first cutting element **110** and the second cutting element **130,** and the first handle **112** and the second handle **132** respectively, move to their original position in absence of any external force. Put simply, the biasing spring **180** biases the first handle **112** to move away from the second handle **132** (say after end of the cutting action) and towards its original position which was the relative position of the first handle **112** and the second handle **132** before start of the cutting action.

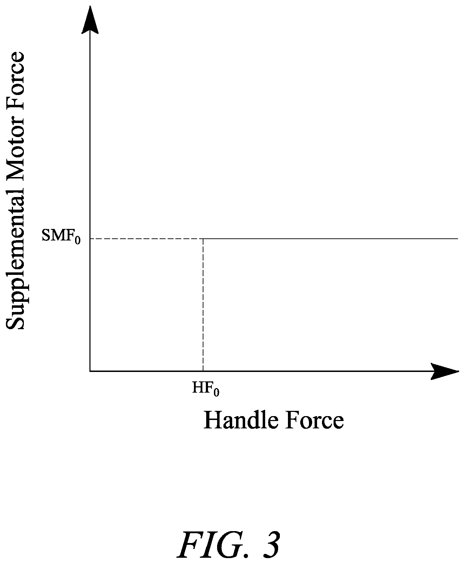

**FIG. 3** shows a graphical representation for supplemental motor force provided for a use scenario of a conventional power-assisted cutting tool (not shown) as known in prior art. As illustrated, the graph depicts a scenario where the supplemental motor force has a constant maximum value **SMF₀**, when the hand force applied (by the user) is more than the threshold **HF**_{**0**.} For implementation, the conventional power-assisted cutting tool may be so configured that a driving means (say similar to the drive unit **170** of the present disclosure) actuates only when the hand force is more than the threshold **HF**_{**0**.} When the drive force reaches the threshold **HF₀**, it is supplemented by the constant maximum value **SMF**_{**0**.} Such a setting of the conventional power-assisted cutting tool, with the constant maximum value **SMF₀** may be relevant for experienced users who may prefer to utilize the hand power initially and then only desire the hand force to be supplemented by a pre-set magnitude of the supplemental motor force i.e. the constant maximum value **SMF₀**, in accordance with representation shown in latest figure. Such a setting may cause jerk or discomfort for a user due to sudden supply of power and may not be desirable.

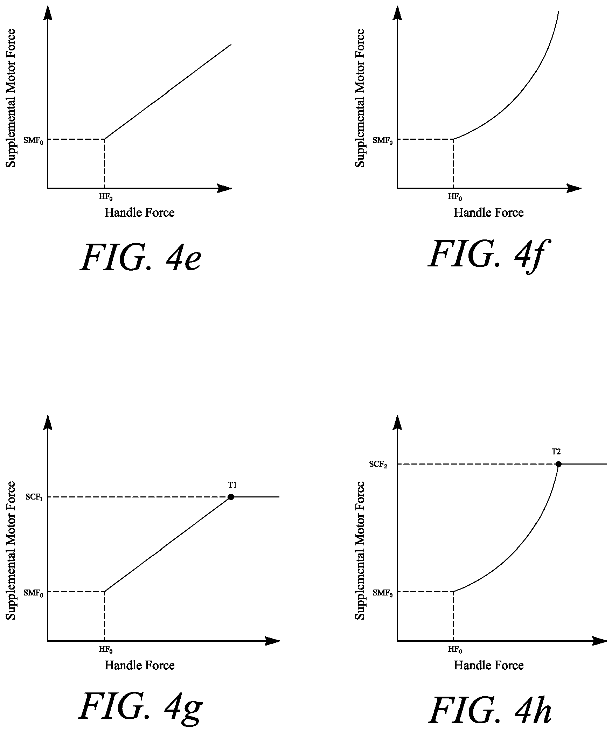

**FIG. 4** **a to 4 h** shows graphical representations for supplemental motor force provided for different use scenarios of the power-assisted cutting tool **100,** in accordance with embodiments of the present invention. The graphical representations depict different scenarios plotting the hand force along the x-axis while the supplemental motor force is along the y-axis.

For instance, **FIGS. 4 a**, **b** illustrate scenarios where the hand force and the supplemental motor force share a linear relationship. Put simply, the hand force applied is directly proportional to the supplemental motor force applied by the drive unit **170** as per **FIG. 4** a. So, **FIG. 4** **a** may find relevance where a user (say a child, old age individuals etc.) will expect assistance by the supplemental motor force throughout and from beginning of the cutting action. In another similar instance, the cutting tool **100** may be so configured that the drive unit **170** actuates only when the hand force is more than a threshold **HF**_{**0**.} This provision of the threshold **HF₀** may find more relevance where the user may be expected to utilize the hand power and only make use of the supplemental motor force, after the threshold **HF₀** from consideration such as saving battery use/status or for any other reason.

Referring to, **FIGS. 4 c**, **d**, the graphs depict scenarios where the hand force and the supplemental motor force share a non-linear relationship. As illustrated, the hand force applied needs to be supplemented by a substantially larger magnitude of the supplemental motor force applied by the drive unit **170** as per the present figures. In particular, **FIG. 4** **c** may find relevance where a user (say a child, old age individuals etc.) will expect assistance by a high magnitude of the supplemental motor force throughout and from beginning of the cutting action. In another similar instance, the cutting tool **100** may be so configured that the drive unit **170** actuates only when the hand force is more than a threshold **HF**_{**0**.} This provision of the threshold **HF₀** may find more relevance where the user force may be more expected and would prefer to utilize the hand power initially and then the hand force may be later supplemented by a comparatively larger magnitude of the supplemental motor force, in accordance with representation shown in **FIG. 4** **d.** Again, **FIG. 4 d** may be utilized to save battery life/power or any other consideration, so that the motor **150** comes into picture only after the threshold is reached by the hand force, to be supplemented by the supplemental motor force. The curve shown is illustrated as a parabolic curve. However, it should be contemplated that any other such non-linear relationship may also be observed without limiting the scope of the present disclosure. For example, a hyperbolic curve, a partially elliptical curve, or a combination of plurality of curves may also be envisioned.

Now referring to **FIGS. 4 e** to **4 h,** the graphs depict scenarios where cutting takes place only post application of a threshold value of the hand force along with a constant maximum value **SMF₀** of the supplemental motor force. Hereafter multiple scenarios have been contemplated, starting from **FIGS. 4 e**, **4 f** where the supplemental motor force is linearly proportional and non-linearly proportional with respect to the hand force, respectively. Such scenarios may be applicable for high force/intensity cutting or with users requiring substantial assistance form the drive unit **170,** for the supplemental motor force. Choice of the linear (**FIG. 4** **e**) or non-linear (**FIG. 4** **f**) relationship may be based on user profile, namely factors such as user experience, cutting force requirement, battery life, cutting tool **100** service life or any other user based parameter as will be evident to a person having knowledge in the relevant art. Building on **FIG. 4** **e**, the next figures depict how the cutting tool **100** may be configured such that the drive unit **170** and the controller **190** are pre-set that after a lapse of a fixed time (**T1, T2** for **FIGS. 4** **g**, **h** respectively, or a pre-set amount of the supplemental motor force or battery power and the like) of the cutting action, the supplemental motor force becomes constant **SCF₁, SCF₂** for **FIGS. 4 g**, **h** respectively, even though the hand force may continue to increase till end of the cutting action takes place, in accordance with representation shown in **FIGS. 4 g**, **h**. These scenarios have been contemplated to save any excessive draining and working up of the motor **150** and the drive unit **170** and thereby to work as a virtual fail-safe of the power-assisted cutting tool **100.** Further, it should be contemplated that the various scenarios depicted through **FIG. 4 a to FIG. 4 h** are exemplary in nature. Various combinations of these examples, as well as various other graphical relationships may also be envisioned based on application requirements and the present disclosure is not limited by any such curves.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- 100: Power-Assisted Cutting Tool
- 110: First Cutting Element
- 112: First Handle
- 120: Pivot
- 130: Second Cutting Element
- 132: Second Handle
- 140: User Interface/Hall Sensor
- 142: Spring
- 144: Magnet
- 146: First Battery
- 150: Motor
- 152: Second Battery
- 160: Gearbox
- 170: Drive Unit/Clutch
- 172: Wire
- 180: Biasing Spring
- 190: Controller

## Claims

1. A power-assisted cutting tool (**100**) comprising:
a first cutting element (**110**);
a second cutting element (**130**) pivotally coupled to the first cutting element (**110**), wherein the first cutting element (**110**) and the second cutting element (**130**) together perform a cutting action on an object placed therebetween;
a drive unit (**170**) operatively coupled to at least one of the first cutting element (**110**) and the second cutting element (**130**), wherein the drive unit (**170**) is configured to selectively provide a supplemental motor (**150**) force to assist a movement of at least one of the first cutting element (**110**) and the second cutting element (**130**) to perform the cutting action;
a user interface (**140**) configured to measure a hand force applied by a user, and generate a signal indicative of the measured hand force; and
a controller (**190**) communicably coupled to the user interface (**140**) and the drive unit (**170**), wherein the controller (**190**) is configured to receive the signal indicative of the measured hand force and actuate the drive unit (**170**) based on the received signal;
wherein the controller (**190**) is configured to adjust the operation of the drive unit (**170**) to provide the supplemental motor (**150**) force based on the measured hand force; and
wherein the controller (**190**) actuates the drive unit (**170**) such that a magnitude of the supplemental motor (**150**) force is at least one of:
a continuous variable configured to attain a plurality of different values within a pre-determined force range when the drive unit (**170**) is assisting the movement of at least one of the first cutting element (**110**) and the second cutting element (**130**) to perform the cutting action; and
a discreet variable configured to attain a plurality of different values within a pre-determined force range when the drive unit (**170**) is assisting the movement of at least one of the first cutting element (**110**) and the second cutting element (**130**) to perform the cutting action;
**characterized in that:**
the user interface (**140**) includes a hall sensor (**140**) and a magnet (**144**) configured to measure the hand force applied by the user.

2. The power-assisted cutting tool (**100**) of claim **1,** wherein the drive unit (**170**) includes a motor (**150**), a gearbox (**160**) and a clutch (**170**) and wire (**172**) arrangement to selectively provide the supplemental motor (**150**) force.

3. The power-assisted cutting tool (**100**) of claim **1,** wherein the cutting tool (**100**) includes a means to activate or deactivate the drive unit (**170**).

4. The power-assisted cutting tool (**100**) of claim **1,** wherein the drive unit (**170**) is actuated to supply the supplemental motor (**150**) force when the hand force measured by the user interface (**140**) is above a threshold value.

5. The power-assisted cutting tool (**100**) of claim **1,** wherein the first cutting element (**110**) and the second cutting element (**130**) are biased by a biasing spring (**180**), which ensures that the first cutting element (**110**) and the second cutting element (**130**) move to their original position in absence of any external force.

## Patentansprüche

1. Ein kraftunterstütztes Schneidwerkzeug (100), das Folgendes umfasst:
ein erstes Schneidelement (110);
ein zweites Schneidelement (130), das schwenkbar mit dem ersten Schneidelement (110) gekoppelt ist, wobei das erste Schneidelement (110) und das zweite Schneidelement (130) zusammen einen Schneidevorgang an einem dazwischen platzierten Objekt durchführen; eine Antriebseinheit (170), die funktionsmäßig mit dem ersten Schneidelement (110) und/oder dem zweiten Schneidelement (130) gekoppelt ist, wobei die Antriebseinheit (170) so ausgebildet ist, dass sie selektiv eine Kraft eines Zusatzmotors (150) bereitstellt, um eine Bewegung des ersten Schneidelements (110) und/oder des zweiten Schneidelements (130) zu unterstützen, um den Schneidevorgang durchzuführen; eine Benutzerschnittstelle (140), die so ausgebildet ist, dass sie eine von einem Benutzer aufgebrachte Handkraft misst und ein die gemessene Handkraft anzeigendes Signal erzeugt; und eine Steuerung (190), die kommunizierend mit der Benutzerschnittstelle (140) und der Antriebseinheit (170) gekoppelt ist, wobei die Steuerung (190) so ausgebildet ist, dass sie das die gemessene Handkraft anzeigende Signal empfängt und die Antriebseinheit (170) auf der Grundlage des empfangenen Signals betätigt; und
wobei die Steuerung (190) so ausgebildet ist, dass sie den Betrieb der Antriebseinheit (170) anpasst, um die Kraft des Zusatzmotors (150) auf der Grundlage der gemessenen Handkraft bereitzustellen; und
wobei die Steuerung (190) die Antriebseinheit (170) so ansteuert, dass eine Größe der Kraft des Zusatzmotors (150) mindestens eine der folgenden ist:
eine kontinuierliche Variable, die so ausgebildet ist, dass sie eine Vielzahl verschiedener Werte innerhalb eines vorbestimmten Kraftbereichs erreicht, wenn die Antriebseinheit (170) die Bewegung von mindestens einem von dem ersten Schneidelement (110) und dem zweiten Schneidelement (130) unterstützt, um den Schneidvorgang durchzuführen; und eine diskrete Variable, die so ausgebildet ist, dass sie eine Vielzahl verschiedener Werte innerhalb eines vorbestimmten Kraftbereichs erreicht, wenn die Antriebseinheit (170) die Bewegung von mindestens einem von dem ersten Schneidelement (110) und dem zweiten Schneidelement (130) unterstützt, um den Schneidvorgang durchzuführen;
**dadurch gekennzeichnet, dass**:
die Benutzerschnittstelle (140) einen Hall-Sensor (140) und einen Magneten (144) enthält, um die vom Benutzer aufgebrachte Handkraft zu messen.

2. Das kraftunterstützte Schneidwerkzeug (100) nach Anspruch 1, wobei die Antriebseinheit (170) einen Motor (150), ein Getriebe (160) und eine Anordnung aus Kupplung (170) und Draht (172) umfasst, um selektiv die zusätzliche Kraft des Motors (150) bereitzustellen.

3. Das kraftunterstützte Schneidwerkzeug (100) nach Anspruch 1, wobei das Schneidwerkzeug (100) eine Einrichtung zum Aktivieren oder Deaktivieren der Antriebseinheit (170) umfasst.

4. Das Kraftunterstützte Schneidwerkzeug (100) nach Anspruch 1, wobei die Antriebseinheit (170) betätigt wird, um die Kraft des Zusatzmotors (150) zu liefern, wenn die von der Benutzerschnittstelle (140) gemessene Handkraft über einem Schwellenwert liegt.

5. Das kraftunterstützte Schneidwerkzeug (100) nach Anspruch 1, wobei das erste Schneidelement (110) und das zweite Schneidelement (130) durch eine Vorspannfeder (180) vorgespannt sind, die sicherstellt, dass sich das erste Schneidelement (110) und das zweite Schneidelement (130) in ihre ursprüngliche Position bewegen, wenn keine äußere Kraft vorhanden ist.

## Revendications

1. Outil de coupe assisté (100) comprenant :
un premier élément de coupe (110) ;
un second élément de coupe (130) couplé de manière pivotante au premier élément de coupe (110), dans lequel le premier élément de coupe (110) et le second élément de coupe (130) effectuent ensemble une action de coupe sur un objet placé entre eux ;
une unité d'entraînement (170) couplée de manière opérationnelle à au moins l'un du premier élément de coupe (110) et du second élément de coupe (130), dans laquelle l'unité d'entraînement (170) est configurée pour fournir de manière sélective une force de moteur supplémentaire (150) pour assister un mouvement d'au moins l'un du premier élément de coupe (110) et du second élément de coupe (130) pour effectuer l'action de coupe ;
une interface utilisateur (140) configurée pour mesurer une force manuelle appliquée par un utilisateur, et générer un signal indicatif de la force manuelle mesurée ; et
un contrôleur (190) couplé de manière communicante à l'interface utilisateur (140) et à l'unité d'entraînement (170), dans lequel le contrôleur (190) est configuré pour recevoir le signal indicatif de la force manuelle mesurée et actionner l'unité d'entraînement (170) sur la base du signal reçu ;
dans lequel le contrôleur (190) est configuré pour ajuster le fonctionnement de l'unité d'entraînement (170) pour fournir la force supplémentaire du moteur (150) sur la base de la force de la main mesurée ; et
dans lequel le contrôleur (190) actionne l'unité d'entraînement (170) de telle sorte qu'une magnitude de la force du moteur supplémentaire (150) est au moins l'une de :
une variable continue configurée pour atteindre une pluralité de valeurs différentes dans une plage de force prédéterminée lorsque l'unité d'entraînement (170) assiste le mouvement d'au moins l'un du premier élément de coupe (110) et du second élément de coupe (130) pour effectuer l'action de coupe ; et
une variable discrète configurée pour atteindre une pluralité de valeurs différentes dans une plage de force prédéterminée lorsque l'unité d'entraînement (170) assiste le mouvement d'au moins l'un du premier élément de coupe (110) et du second élément de coupe (130) pour effectuer l'action de coupe ;
**caractérisé en ce que** :
l'interface utilisateur (140) comprend un capteur à effet Hall (140) et un aimant (144) configurés pour mesurer la force de la main appliquée par l'utilisateur.

2. Outil de coupe assisté (100) selon la revendication 1, dans lequel l'unité d'entraînement (170) comprend un moteur (150), une boîte de vitesses (160) et un agencement d'embrayage (170) et de fil (172) pour fournir de manière sélective la force supplémentaire du moteur (150).

3. Outil de coupe assisté (100) selon la revendication 1, dans lequel l'outil de coupe (100) comprend un moyen pour activer ou désactiver l'unité d'entraînement (170).

4. Outil de coupe assisté (100) selon la revendication 1, dans lequel l'unité d'entraînement (170) est actionnée pour fournir la force du moteur supplémentaire (150) lorsque la force manuelle mesurée par l'interface utilisateur (140) est supérieure à une valeur seuil.

5. Outil de coupe assisté (100) selon la revendication 1, dans lequel le premier élément de coupe (110) et le second élément de coupe (130) sont sollicités par un ressort de sollicitation (180), qui garantit que le premier élément de coupe (110) et le second élément de coupe (130) se déplacent vers leur position d'origine en l'absence de toute force externe.
